# EUROPEAN PATENT APPLICATION

(11) **EP 4 467 688 A1**
(43) Date of publication of application: **27.11.2024**
(21) Application number: 23774970.0
(22) Date of filing: 22.03.2023
(51) Int. Cl.: C25D 17/08

(54) **SURFACE TREATMENT JIG**

(30) Priority: 23.03.2022 JP 2022047104
(71) Applicant: NHK Spring Co., Ltd., Yokohama-shi, Kanagawa 236-0004 (JP)
(72) Inventor: NOZAWA, Takahiro, Yokohama-shi, Kanagawa 236-0004 (JP); KUROKAWA, Tomoya, Yokohama-shi, Kanagawa 236-0004 (JP); DOI, Takashi, Yokohama-shi, Kanagawa 236-0004 (JP)
(74) Representative: Hoffmann Eitle
(86) International application number: PCT/JP2023/011288
(87) International publication number: WO 2023/182375

(57) **Abstract**

A surface treatment jig according to the present invention is a surface treatment jig for performing surface treatment of an exterior body of an accumulator including a bottom, a shell and a port in a state where the surface treatment jig is connected to the exterior body and supports the exterior body includes: a support portion configured to support the accumulator; and a hook portion connected with the support portion. The support portion has a shape tapered near the hook portion.

## Description

### Field

The present invention relates to surface treatment jigs for performing, for example, surface treatment of accumulators.

### Background

Bellows have been used conventionally as fluid separation membranes or fluid sealing membranes having airtightness and stretchability in accumulators. A bellows is provided in an internal space formed by an exterior body composed of a bottom, a shell, and a port. The exterior body is subjected to surface treatment so as to be increased in corrosion resistance. For example, in the surface treatment, the port is attached to a jig, the jig is hung, paint is sprayed, and a metallic coating is thereby formed on a surface of the exterior body. A jig known as a jig used in coating has, for example, a columnar support portion that supports an object to be treated (for example, see Patent Literature 1 or Patent Literature 2).

### Citation List

### Patent Literature

Patent Literature 1: Japanese Unexamined Patent Application Publication No. 2013-136023
Patent Literature 2: Japanese Unexamined Patent Application Publication No. 57-165065

### Summary

### Technical Problem

However, in a case where the jig described in Patent Literature 1 or 2 is used, the coating thickness of the coating on a portion of the exterior body may become smaller than that of the coating on the rest of the exterior body, the portion being where the jig is connected to the exterior body.

The present invention has been made in view of the above and an object thereof is to provide a surface treatment jig that enables minimization of reduction in coating thickness.

### Solution to Problem

To solve the above-described problem and achieve the object, a surface treatment jig according to the present invention is for performing surface treatment of an exterior body of an accumulator including a bottom, a shell and a port in a state where the surface treatment jig is connected to the exterior body and supports the exterior body, and includes: a support portion configured to support the accumulator; and a hook portion connected with the support portion, wherein the support portion has a shape tapered near the hook portion.

Moreover, in the above-described surface treatment jig according to the present invention, the support portion includes: a head portion provided on a side near the hook portion; a bottom portion provided on an opposite side of the side near the head portion; and an intermediate portion provided between the head portion and the bottom portion, and the bottom portion has a height smaller than a sum of heights of the head portion and the intermediate portion.

Moreover, in the above-described surface treatment jig according to the present invention, the intermediate portion has a frustum shape.

Moreover, in the above-described surface treatment jig according to the present invention, the support portion includes: a head portion provided on a side near the hook portion; and a bottom portion provided on an opposite side of the side near the head portion; and the bottom portion has a height smaller than a height of the head portion.

### Advantageous Effects of Invention

The present invention has an effect of enabling minimization of reduction in coating thicknesses of exterior bodies.

### Brief Description of Drawings

FIG. 1 is a sectional diagram illustrating a configuration of an accumulator that is an object to be treated in surface treatment according to an embodiment of the present invention.
FIG. 2 is a diagram illustrating a surface treatment jig with an exterior body of the accumulator illustrated in FIG. 1.
FIG. 3 is a diagram for illustration of a configuration of the surface treatment jig illustrated in FIG. 2.
FIG. 4 is a diagram for illustration of a surface treatment method.
FIG. 5 is a diagram (Part 1) illustrating a mode of adhesion of metallic ions in surface treatment.
FIG. 6 is a diagram for illustration of an example of a configuration of a conventional surface treatment jig.
FIG. 7 is a diagram (Part 2) illustrating a mode of adhesion of metallic ions in surface treatment.
FIG. 8 is a diagram (Part 1) illustrating coating thickness measurement positions on the exterior body that has been subjected to the surface treatment.
FIG. 9 is a diagram (Part 2) illustrating coating thickness measurement positions on the exterior body that has been subjected to the surface treatment.
FIG. 10 is a diagram illustrating minimum values from coating thickness measurement results at the measurement positions illustrated in FIG. 8.
FIG. 11 is a diagram illustrating maximum values from the coating thickness measurement results at the measurement positions illustrated in FIG. 8.
FIG. 12 is a diagram illustrating minimum values from coating thickness measurement results at the measurement positions illustrated in FIG. 9.
FIG. 13 is a diagram illustrating maximum values from the coating thickness measurement results at the measurement positions illustrated in FIG. 9.
FIG. 14 is a diagram for illustration of a configuration of a surface treatment jig according to a first modified example.
FIG. 15 is a diagram for illustration of a configuration of a surface treatment jig according to a second modified example.

### Description of Embodiments

A mode for implementing the present invention (hereinafter, referred to as an "embodiment") will hereinafter be described by reference to the appended drawings. The drawings are schematic, a relation between a thickness and a width of each portion and ratios among thicknesses of respective portions may be different from the actual relation and ratios, and the drawings may also include a portion that differs in its dimensional relations or ratios among the drawings.

### Embodiment

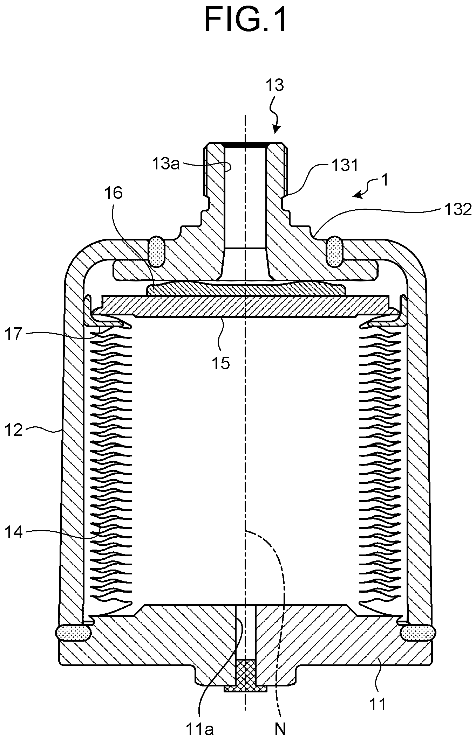

FIG. 1 is a sectional diagram illustrating a configuration of an accumulator according to an embodiment of the present invention. An accumulator 1 illustrated in FIG. 1 includes: a bottom 11; a shell 12; a port 13; a bellows 14 housed in an internal space formed by the bottom 11, the shell 12, and the port 13; a cap body portion 15; a cap elastic portion 16; and a guide bellows 17. The bottom 11, the shell 12, and the port 13 compose an exterior body of the accumulator 1.

The bottom 11 and the port 13 are formed by using, for example, a cold-worked material. The shell 12 is formed by using, for example, a hot-worked material.

A space formed by the bottom 11, the shell 12, and the port 13 is divided by the bellows 14 in the accumulator 1. Specifically, spaces different from each other are formed outside and inside the bellows 14. The internal space in the bellows 14 communicates with the outside via a hole 11a in the bottom 11. The space outside the bellows 14 communicates with the outside via a hole 13a in the port 13. FIG. 1 illustrates an example where central axes of the holes 11a and 13a coincide with a central axis N of the accumulator 1.

Furthermore, the bottom 11, the shell 12, and the port 13 are firmly fixed to each other by being welded to each other at their respective joint portions.

The accumulator 1 has liquid (hydraulic oil) or gas (for example, nitrogen gas) enclosed in each of the space (bellows external space) formed by the exterior body and the bellows 14 and the internal space in the bellows 14. For example, liquid is introduced into the bellows external space and gas is enclosed in the internal space.

The port 13 has: an introduction portion 131 that extends tubularly and that is an inlet for the liquid into the shell 12; and an engagement portion 132 that is connected with one end of the introduction portion 131 and that engages with an inner wall surface of the shell 12. Ridged and grooved shapes for being in threaded engagement with a connection member, such as a line, are formed on an outer peripheral surface of the introduction portion 131.

The bellows 14 has a cylindrical shape. A lateral surface portion of the bellows 14 has an accordion shape with repeated ridges and grooves, and is expanded and contracted by loads from the outside. Furthermore, an interval between the shell 12 and the bellows 14 is maintained by the guide bellows 17 provided peripherally to the bellows 14 and the bellows 14 is thereby capable of smooth expanding and contracting operation. The bellows 14 is formed by using, for example, stainless steel (SUS304). Furthermore, the guide bellows 17 is formed by using, for example, polybutylene terephthalate (PBT) or polyamide.

The cap body portion 15 has a plate shape and covers an opening of the bellows 14, the opening being at an opposite end of the bellows 14, the opposite end being opposite to an end where the bottom 11 is, an end portion of the bellows 14 is welded to the cap body portion 15, and the cap body portion 15 thereby seals up the opening. The cap body portion 15 is formed by using a material having durability in a pressure state (low pressure or high pressure) in the accumulator 1. The cap body portion 15 is formed by using, for example, a metal, specifically, Steel Plate Hot Commercial (SPHC). The cap body portion 15 preferably has thermal resistance according to a usage state.

The cap elastic portion 16 has a plate shape and is provided on an opposite side of the cap body portion 15, the opposite side being opposite to a side where the bellows 14 is. The cap elastic portion 16 is positioned between the port 13 and the cap body portion 15 and seals in the liquid (hydraulic oil) between the shell 12 and the bellows 14. The cap elastic portion 16 is formed by using, for example, acrylonitrile butadiene rubber (NBR).

As to the cap body portion 15 and the cap elastic portion 16, the cap elastic portion 16 is bonded to the cap body portion 15 by, for example, application of an adhesive on an adherend surface of the cap body portion 15 after surface treatment by phosphoric acid treatment of the adherend surface.

In response to a change in pressure in the line connected to the accumulator 1 by supply of the liquid via the hole 13a in the port 13, for example, the liquid flows into the accumulator 1 from the hole 13a in the port 13 and the cap body portion 15 and the cap elastic portion 16 are thereby pushed up. Pressure in the space between the bellows 14 and the shell 12 is always the same as pressure inside the bellows 14.

Furthermore, in a case where the hydraulic oil has flown in from the hole 13a due to an increase in oil pressure in the line connected to the accumulator 1, the bellows 14 contracts when the pressure in the bellows 14 becomes, due to the hydraulic oil, equal to or larger than enclosure pressure of the accumulator 1. On the other hand, in response to a decrease in the oil pressure in the line and expansion (return) of the bellows 14 from the contracted state, the hydraulic oil is discharged outside from the hole 13a. This discharge of the liquid from the hole 13a controls a state of pressurization by the accumulator 1.

The exterior body of the accumulator 1 is subjected to surface treatment. Specifically, the exterior body is supported by a surface treatment jig and a coating is formed in a state where this jig has been hung. An example where zinc-nickel plating is performed will be described with respect to this embodiment.

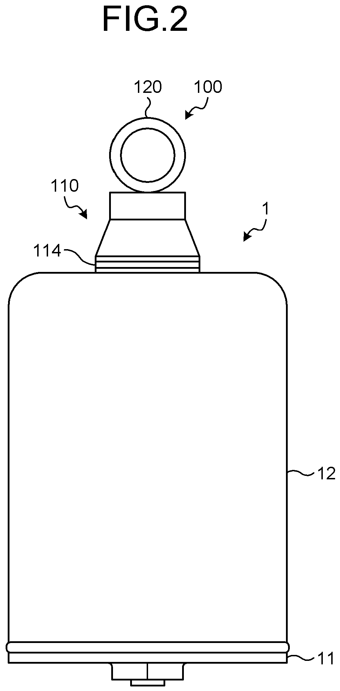

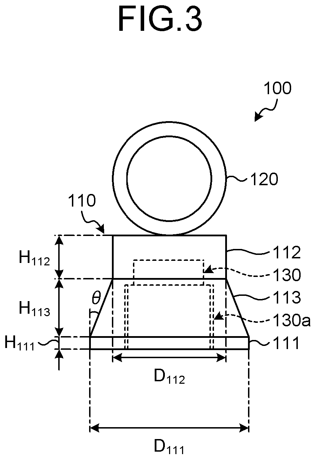

FIG. 2 is a diagram illustrating the surface treatment jig for the exterior body of the accumulator illustrated in FIG. 1. FIG. 3 is a diagram for illustration of a configuration of the surface treatment jig illustrated in FIG. 2. In the surface treatment, a surface treatment jig 100 is attached to the port 13 of the accumulator 1. In this attachment, the port 13 and the surface treatment jig 100 are connected to each other, for example, by threaded engagement.

The surface treatment jig 100 has a support portion 110 to support the port 13, and a hook portion 120 that is provided on an opposite side of the support portion 110 and is ring-shaped, the opposite side being opposite to a side where the port 13 is connected.

The support portion 110 has: a bottom portion 111 positioned at an opposite end of the support portion 110, the opposite end being opposite to an end where the hook portion 120 is; a head portion 112 connected with the hook portion 120; and an intermediate portion 113 provided between the bottom portion 111 and the head portion 112. The support portion 110 has, formed therein, a hole portion 130 extending from the bottom portion 111 to the head portion 112 and being bottomed. An inner wall of the hole portion 130 has a threaded portion 130a formed thereon and having grooved and ridged shapes to be in threaded engagement with the port 13.

The intermediate portion 113 has a hollow truncated cone shape, one end connected with the bottom portion 111, and the other end connected with the head portion 112. The head portion 112 has an outer circumference having a diameter D₁₁₂ smaller than a diameter D₁₁₁ of an outer circumference of the bottom portion 111. The bottom portion 111 has a height H₁₁₁ smaller than the sum (H₁₁₂ + H₁₁₃) of a height H₁₁₂ of the head portion 112 and a height H₁₁₃ of the intermediate portion 113. For example, the bottom portion 111 has a diameter of 27 mm, the height H₁₁₁ of the bottom portion 111 is 2 mm, and an angle θ formed between an outer surface of the intermediate portion 113 and a lateral surface of the bottom portion 111 is 20°. The angle θ is not necessarily 20° and may be any acute angle.

Furthermore, packing 114 is provided between the surface treatment jig 100 and the port 13. The packing 114 is formed by using an elastic material and achieves liquid tightness between the surface treatment jig 100 and the port 13. The height H₁₁₁ of the bottom portion 111 is set to a value that prevents the packing 114 from coming outside. If the packing 114 comes outside, the coating, which will be described later, may be not formed.

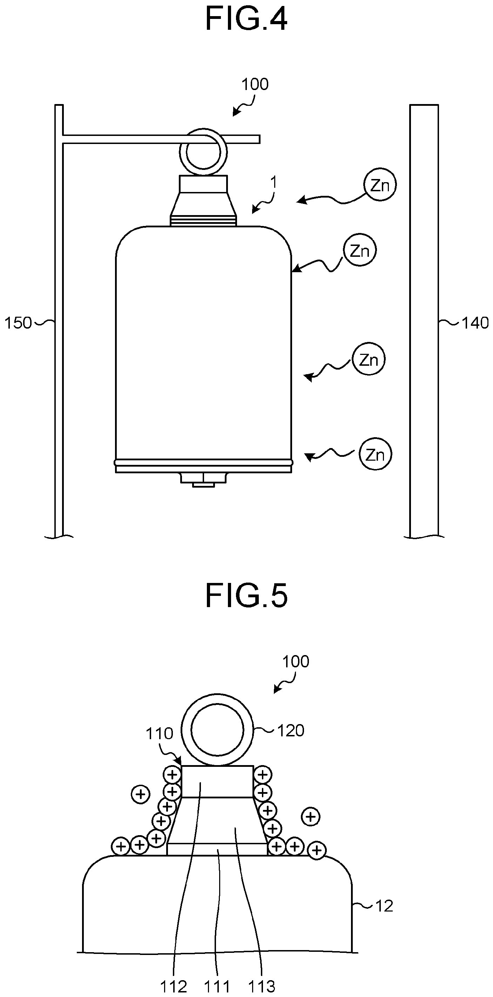

FIG. 4 is a diagram for illustration of a surface treatment method. In the surface treatment, a metallic coating is formed on a surface of the exterior body by use of an anode 140, a support member 150, and an electrolyte. Specifically, the hook portion 120 of the surface treatment jig 100, to which the accumulator 1 has been attached, is hung from the support member 150 and the accumulator 1 is immersed in the electrolyte. The anode 140 and the support member 150 have been connected to a power source, and the surface treatment jig 100 and the accumulator 1 that are connected to the support member 150 compose part of a cathode. In this embodiment, the anode 140 is made of zinc and the electrolyte includes zinc ions. Through supply of electricity, the zinc ions move from the anode 140 toward the cathode and a reduction reaction that occurs near the cathode forms a zinc coating on the exterior body.

FIG. 5 is a diagram (Part 1) illustrating a mode of adhesion of metallic ions in the surface treatment. Illustration of the packing 114 is omitted in FIG. 5. Because the surface treatment jig 100 has a shape that tapers from the bottom portion 111 to the head portion 112, there is no electric current difference at the surface of the surface treatment jig 100 and the surface of the exterior body connected with the support portion 110 and adhesion of cations is thus promoted.

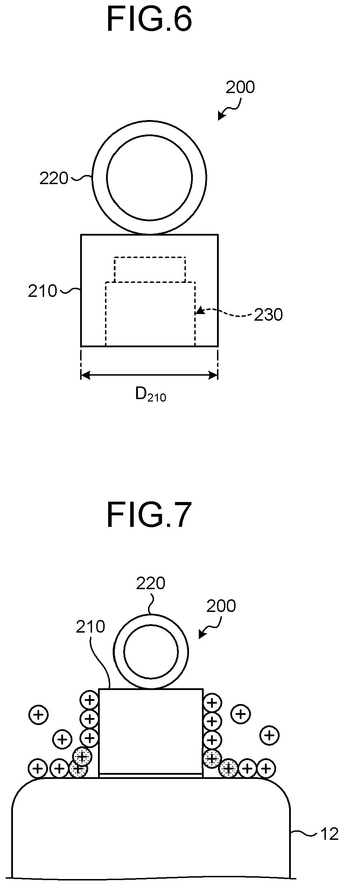

FIG. 6 is a diagram for illustration of an example of a configuration of a conventional surface treatment jig. A surface treatment jig 200 illustrated in FIG. 6 has a support portion 210 to support the port 13, the support portion 210 being columnar, and a hook portion 220 that is provided on an opposite side of the support portion 210 and that is ring-shaped, the opposite side being opposite to a side where the port 13 is connected. The support portion 210 has a hole portion 230 formed therein, the hole portion 230 being bottomed. An inner wall of the hole portion 230 has a threaded portion formed thereon and having grooved and ridged shapes to be in threaded engagement with the port 13. The support portion 210 extends with a uniform diameter and this diameter D₂₁₀ is equivalent to the diameter of the bottom portion 111.

FIG. 7 is a diagram (Part 2) illustrating a mode of adhesion of metallic ions in surface treatment. In a case where surface treatment is performed by use of the surface treatment jig 200 illustrated in FIG. 6, at a corner portion between a surface of the surface treatment jig 200 and the surface of the exterior body connected with the support portion 210, a high electric current portion and a low electric current portion are generated and cations may not adhere to the low electric current portion. In FIG. 7, cations illustrated with hatching are unable to be bonded to anions. Therefore, the metallic coating may be not formed or the coating may decrease in coating thickness, at the corner portion.

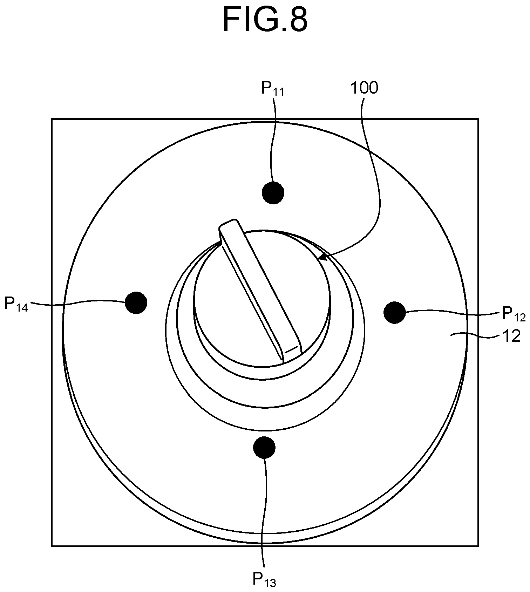

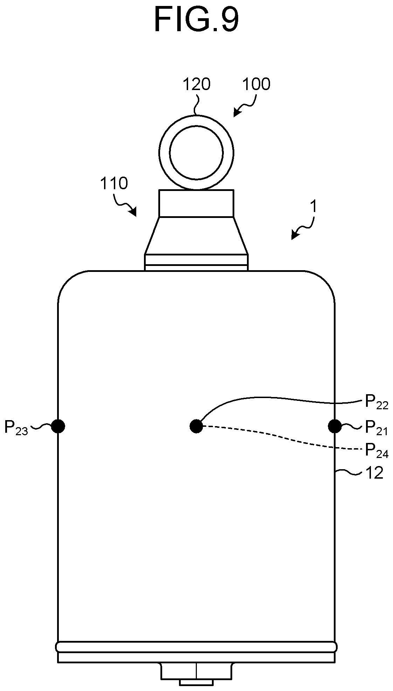

The following description is on results of surface treatment by use of the surface treatment jig 100 illustrated in FIG. 3 and measurement of coating thicknesses. FIG. 8 and FIG. 9 are diagrams illustrating coating thickness measurement positions on the exterior body that has been subjected to the surface treatment. For the exterior body that has been subjected to the surface treatment, four measurement positions (positions P₁₁ to P₁₄) evenly spaced out were set at the joint portion between the shell 12 and the port 13 and four measurement positions (positions P₂₁ to P₂₄) evenly spaced out in a circumferential direction were set on a lateral surface of the shell 12. A measurement result at each of these positions is a coating thickness at that position, the coating thickness being the mean of coating thicknesses measured for two points at that position. The positions P₁₁ to P₁₄ are set at positions within 3 mm from a weld between the shell 12 and the port 13.

Furthermore, in this experiment, the surface treatment was performed with the voltage and the processing time period changed. Specifically, zinc plating was performed in four patterns: (1) at 7 V for 25 minutes; (2) at 7 V for 30 minutes; (3) at 7 V for 35 minutes; and (4) at 8 V for 40 minutes.

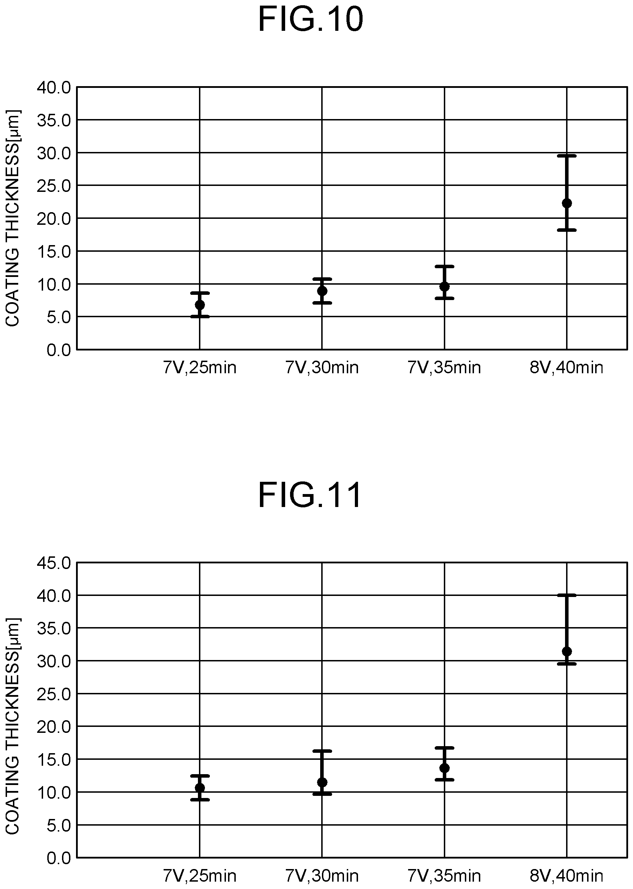

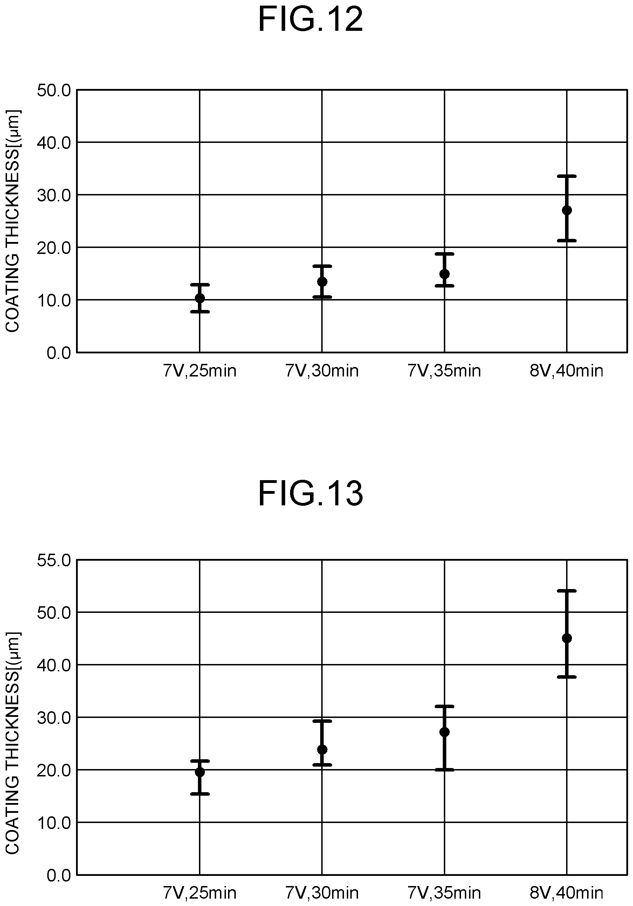

FIG. 10 is a diagram illustrating minimum values from the coating thickness measurement results at the measurement positions illustrated in FIG. 8. FIG. 11 is a diagram illustrating maximum values from the coating thickness measurement results at the measurement positions illustrated in FIG. 8. Furthermore, FIG. 12 is a diagram illustrating minimum values from the coating thickness measurement results at the measurement positions illustrated in FIG. 9. FIG. 13 is a diagram illustrating maximum values from the coating thickness measurement results at the measurement positions illustrated in FIG. 9. The vertical axes represent coating thickness in units of um. In FIG. 10 to FIG. 13, for each set of measurement conditions, the mean value of coating thicknesses at the measurement positions is plotted and the maximum values and minimum values are represented by error bars.

As illustrated in FIG. 10 and FIG. 11, at the joint portion between the shell 12 and the port 13, the coating thicknesses are 5 um or more for the patterns (1) to (4) (see FIG. 10) and differences between the maximum values and the minimum values are 10 um or less. On the other hand, as illustrated in FIG. 12 and FIG. 13, at a side surface portion of the shell 12, the coating thicknesses are 5 um or more for the patterns (1) to (4). It can thus be said that performing the surface treatment by using the surface treatment jig 100 results in sufficient coating thickness of the coating at the joint portion between the shell 12 and the port 13 and ensures the coating thickness of the coating formed near the jig.

In this embodiment, because the surface treatment jig 100 is configured to include the support portion 110 to support the port 13, the support portion 110 having a shape tapered toward the hook portion 120, the electric current difference at the surface of the exterior body is minimized and the formation of the coating on the surface of the exterior body is ensured. This embodiment enables minimization of reduction in coating thickness of an exterior body in surface treatment using a jig.

### First Modified Example

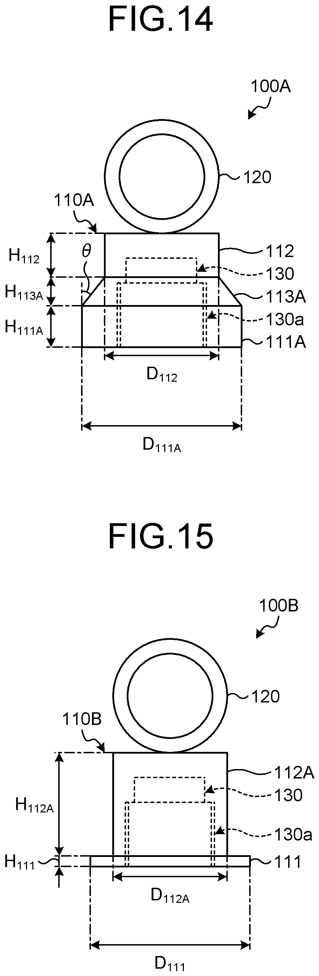

A first modified example of the surface treatment jig according to the present invention will be described next by reference to FIG. 14. FIG. 14 is a diagram for illustration of a configuration of a surface treatment jig according to the first modified example. The same reference sign is assigned to any portion that is the same as that of the surface treatment jig 100 according to the embodiment.

A surface treatment jig 100A has a support portion 110A to support the port 13, and the hook portion 120 that is provided on an opposite side of the support portion 110A and that is ring-shaped, the opposite side being opposite to a side where the port 13 is connected.

The support portion 110A has: a bottom portion 111A positioned at an opposite end of the support portion 110A, the opposite end being opposite to the end where the hook portion 120 is; the head portion 112 connected with the hook portion 120; and an intermediate portion 113A provided between the bottom portion 111A and the head portion 112. The support portion 110A has, formed therein, the hole portion 130 extending from the bottom portion 111A to the head portion 112 and being bottomed. The inner wall of the hole portion 130 has the threaded portion 130a formed thereon and having grooved and ridged shapes to be in threaded engagement with the port 13.

The intermediate portion 113A has a hollow truncated cone shape, one end connected with the bottom portion 111A, and the other end connected with the head portion 112. The head portion 112 has the outer circumference having the diameter D₁₁₂ smaller than a diameter D_{111A} of the bottom portion 111A. The bottom portion 111A has a height H_{111A} smaller than the sum (H₁₁₂ + H_{113A}) of the height H₁₁₂ of the head portion 112 and a height H_{113A} of the intermediate portion 113A. The height H_{111A} is also larger than the height H₁₁₁ of the bottom portion 111. For example, the bottom portion 111A has a diameter of 27 mm, the height H_{111A} of the bottom portion 111A is 10 mm, and an angle θ formed between an outer surface of the intermediate portion 113A and a lateral surface of the bottom portion 111A is 45°.

Because the surface treatment jig 100A has a shape tapered from the bottom portion 111A to the head portion 112, cations adhere to a surface of the surface treatment jig 100A and the surface of the exterior body connected with the support portion 110A due to the elimination of the electric current difference, similarly to the embodiment.

In this first modified example, similarly to the embodiment, because the surface treatment jig 100A is configured to include the support portion 110A to support the port 13, the support portion 110A having a shape tapered toward the hook portion 120, the electric current difference at the surface of the exterior body is minimized and the formation of the coating on the surface of the exterior body is ensured. This first modified example enables minimization of reduction in coating thickness of an exterior body in surface treatment using a jig.

### Second Modified Example

A second modified example of the surface treatment jig according to the present invention will be described next by reference to FIG. 15. FIG. 15 is a diagram for illustration of a configuration of a surface treatment jig according to the second modified example. The same reference sign is assigned to any portion that is the same as that of the surface treatment jig 100 according to the embodiment.

A surface treatment jig 100B has a support portion 110B to support the port 13, and a hook portion 120 that is provided on an opposite side of the support portion 110B and that is ring-shaped, the opposite side being opposite to a side where the port 13 is connected.

The support portion 110B has the bottom portion 111 positioned at an opposite end of the support portion 110B, the opposite end being opposite to an end where the hook portion 120 is, and a head portion 112A having one end connected with the bottom portion 111 and the other end connected with the hook portion 120. The support portion 110B has, formed therein, the hole portion 130 extending from the bottom portion 111 to the head portion 112A and being bottomed. The inner wall of the hole portion 130 has the threaded portion 130a formed thereon and having grooved and ridged shapes to be in threaded engagement with the port 13. The support portion 110B is composed of the bottom portion 111 and the head portion 112A and has a hollow cylindrical shape having a stepped shape, with a diameter near the hook portion 120 being smaller than a diameter near the opposite end.

The head portion 112A has an outer circumference with a diameter D_{112A} smaller than the diameter D₁₁₁ of the bottom portion 111. The height H₁₁₁ of the bottom portion 111 is smaller (lower) than a height H_{112A} of the head portion 112. For example, the height H_{112A} of the head portion 112A is 24 mm.

Because the surface treatment jig 100B has a shape tapered from the bottom portion 111 to the head portion 112A and the height of the bottom portion 111 has been set to the height H₁₁₁ that minimizes the electric current difference, cations are bonded to anions on the surface of the exterior body connected with the support portion 110B of the surface treatment jig 100B.

In this second modified example, similarly to the embodiment, because the surface treatment jig 100B is configured to include the support portion 110B to support the port 13, the support portion 110B having the shape tapered toward the hook portion 120, the electric current difference at the surface of the exterior body is minimized and the formation of the coating on the surface of the exterior body is ensured. This second modified example enables minimization of reduction in coating thickness of an exterior body in surface treatment using a jig.

Some modes for implementing the present invention have been described thus far, but the present invention is not to be limited only to the above described embodiment. For example, in the examples described above with respect to the embodiment and the modified examples, the intermediate portion has a frustum shape with the outer peripheral lateral surface forming an inclined surface, but the intermediate portion may have a hollow cylindrical shape extending with a diameter smaller than the diameter of the head portion and the support portion as a whole may thus be recessed at a middle portion thereof.

The present invention may thus include various embodiments not described herein, and various design changes, for example, may be made without departing from the technical ideas determined by the claims.

### Industrial Applicability

As described hereinbefore, a surface treatment jig according to the present invention is suitable for minimizing reduction in coating thickness of a coating resulting from surface treatment.

### Reference Signs List

1 ACCUMULATOR
11 BOTTOM
12 SHELL
13 PORT
14 BELLOWS
15 CAP BODY PORTION
16 CAP ELASTIC PORTION
17 GUIDE BELLOWS
100, 100A, 100B SURFACE TREATMENT JIG
110, 110A SUPPORT PORTION
111, 111A BOTTOM PORTION
112, 112A HEAD PORTION
113, 113A INTERMEDIATE PORTION
114 PACKING
120 HOOK PORTION
130 HOLE PORTION
140 ANODE
150 SUPPORT MEMBER

## Claims

1. A surface treatment jig for performing surface treatment of an exterior body of an accumulator including a bottom, a shell and a port in a state where the surface treatment jig is connected to the exterior body and supports the exterior body, the surface treatment jig comprising:
a support portion configured to support the accumulator; and
a hook portion connected with the support portion, wherein
the support portion has a shape tapered near the hook portion.

2. The surface treatment jig according to claim 1, wherein
the support portion includes:
a head portion provided on a side near the hook portion;
a bottom portion provided on an opposite side of the side near the head portion; and
an intermediate portion provided between the head portion and the bottom portion, and
the bottom portion has a height smaller than a sum of heights of the head portion and the intermediate portion.

3. The surface treatment jig according to claim 2, wherein the intermediate portion has a frustum shape.

4. The surface treatment jig according to claim 1, wherein
the support portion includes:
a head portion provided on a side near the hook portion; and
a bottom portion provided on an opposite side of the side near the head portion; and
the bottom portion has a height smaller than a height of the head portion.
